Europäisches Patentamt

European Patent Office    (11) Numéro de publication:    **0 143 007**

Office européen des brevets    **A1**

(12) **DEMANDE DE BREVET EUROPEEN**

(21) Numéro de dépôt: 84401372.2

(22) Date de dépôt: 28.06.84

(51) Int. Cl.⁴: $C\ 22\ B\ 3/00$
$E\ 21\ B\ 43/28$, $E\ 21\ B\ 43/00$

(30) Priorité: 30.06.83 FR 8310953

(43) Date de publication de la demande:
29.05.85 Bulletin 85/22

(84) Etats contractants désignés:
AT BE CH DE FR GB IT LI LU NL SE

(71) Demandeur: COMPAGNIE FRANCAISE DE MOTKA
Tour Maine-Montparnasse 33, avenue du Maine
F-75755 Paris Cédex 15(FR)

(72) Inventeur: Lesty, Serge
Rue Haute
F-48300 Langogne(FR)

(72) Inventeur: Surjous, Robert
Moulin Marcé
F-48300 Langogne(FR)

(74) Mandataire: Ricalens, François
Service de la Propriété Industrielle du Groupe IMETAL 1,
avenue Albert Einstein B.P. 106
F-78191 Trappes Cedex(FR)

(54) Nouveau procédé de lixiviation en tas.

(57) La présente invention concerne un nouveau procédé de lixiviation en tas.

Elle est caractérisé par le fait qu'il comporte les étapes suivantes:

a) on prépare le terrain destiné à recevoir le tas;

b) on forme le tas;

c) on fore des puits d'injection dans le tas;

d) on injecte la solution de lixiviation au moyen des puits d'injection;

e) on récupère la solution de lixiviation à la base du tas ou par pompage dans des puits voisins de ceux d'injection.

*Fig.3*

EP 0 143 007 A1

0143007

La présente invention a pour objet un nouveau procédé de lixiviation en tas.

Elle concerne plus particulièrement un nouveau procédé de lixiviation en tas de minerais pauvres.

Au cours de l'exploitation de gisements de matériaux nécessitant un traitement métallurgique, on se trouve fréquemment en présence de gisements se caractérisant par un tonnage modeste ne justifiant pas la construction d'une usine de traitement, ou par des teneurs trop faibles pour permettre le transport de ce minerai à une usine existante.

Par ailleurs, dans le cas de gisements importants justifiant la construction d'une usine, on est souvent contraint de rejeter comme stériles ou comme haldes des minerais dont la teneur en matériaux valorisables est trop faible pour que leur traitement en usine conventionnelle soit envisageable ; ceci est particulièrement net dans le cas de la méthode d'exploitation à ciel ouvert, de plus en plus répandue actuellement et qui conduit à l'extraction de produits fatals en quantité très importante : ceci est vrai également, dans le cas d'exploitation souterraine par abattage en masse où la masse de produits fatals est également élevée.

C'est la raison pour laquelle, depuis quelques décennies, sont apparues des techniques de lixiviation en tas qui permettent de traiter des produits non valorisables en usine classique.

Toutefois, cette technique très fruste, si elle permet d'améliorer quelque peu le bilan global de récupération des matériaux valorisables d'un gisement, ne permet pas, en raison de son rendement en général médiocre (50 à 70 %) et des très nombreux inconvénients qu'elle entraîne par ailleurs, notamment en ce qui concerne la détérioration des sites et la pollution des eaux, de modifier sensiblement les conditions économiques d'exploitation d'un gisement important ; elle est, par ailleurs, généralement inapte à valoriser les petits gisements.

Il faut noter que l'application à la récupéra-

0143007

tion de l'uranium de ces techniques existantes pose des problèmes particuliers, étant donné les contraintes très strictes concernant d'une part la radioactivité des rejets (uranium et radium dans l'eau) et d'autre part la radioactivité des tas proprement dits (émission de rayonnements) ; ces problèmes sont aggravés par le risque à très long terme que présentent ces pollutions.

C'est pourquoi l'un des buts de la présente invention, qui est issue d'une recherche aidée par la Communauté Economique Européenne, est de fournir un procédé de lixiviation en tas qui permette d'atteindre des rendements voisins de ceux obtenus en réacteurs chimiques et de préférence des rendements au moins égaux à 90 % des rendements obtenus en réacteurs chimiques dans des conditions similaires.

Un autre but de la présente invention est de fournir un procédé de lixiviation en tas qui protège les environs des diverses radiations émises par les minerais en tas, dans le cas d'une application aux minerais radioactifs.

Un autre but est de fournir un procédé qui permette de réhabiliter les sites en cours d'exploitation.

Un autre but est de fournir un procédé de lixiviation en tas qui ne pollue pas les eaux de surface environnant le tas à lixivier et qui ne soit pas influencé par les précipitations atmosphériques.

Un autre but de la présente invention est de rendre improbable la pollution d'eaux souterraines par infiltration au travers du sol de solutions lixiviantes.

Un autre but enfin est de permettre la lixiviation en tas à une température différente de la température ambiante sans pertes thermiques excessives.

Ces buts, ainsi que d'autres qui apparaîtront par la suite, sont atteints au moyen du procédé selon l'invention qui est caractérisé par le fait qu'il comporte les étapes suivantes :

a) on prépare le terrain destiné à recevoir le tas ;

b) on forme le tas ;

c) on fore des puits d'injection dans le tas ;

d) on injecte la solution de lixiviation au moyen des puits d'injection ;

e) on récupère la solution de lixiviation par exemple à la base du tas ;

f) optionnellement on protège le tas à lixivier, cette protection pouvant avantageusement être placée après l'étape c).

Les étapes a) et b), bien qu'elles soient moins décisives que les étapes suivantes, jouent cependant un rôle très important dans la réalisation des buts énoncés.

Le choix du terrain, apte à recevoir les tas, est en particulier très important, il doit être fait en fonction des critères principaux suivants.

Il est très souhaitable que le terrain soit situé dans une zone :

- mécaniquement stable, l'absence d'accidents importants pouvant être vérifiée par des levées géophysiques (par exemple méthodes électrique ou électromagnétique) ou géologique ;

- présentant une pente naturelle comprise entre 1 et 5 %, de préférence entre 2 et 4 %, la partie basse de cette zone n'étant pas inondable.

Lorsque cela est possible, le terrain ainsi choisi est avantageusement décapé, la terre végétale étant mise en réserve pour les éventuels travaux d'aménagement complémentaires qui seront exposés ci-après.

Un système de drainage, par exemple par tuyauteries plastiques perforées, est avantageusement mis en place. Les tuyaux sont alors de préférence reliés à la base à un collecteur général qui pourra être muni d'un échantillonneur en vue d'une analyse des eaux récoltées.

Ce sol après drainage doit être rendu pratiquement étanche au moyen d'un matériau présentant de préférence des caractéristiques granulométriques suivantes :

- tout-venant inférieur à 250 millimètres
- $d_{80}$ compris entre 100 et 160 millimètres
- $d_{20}$ compris entre 2 et 4 millimètres

et réparti généralement en deux couches successivement compactées au moyen d'un appareil compacteur dûment dimensionné.

Dans tous les cas, cet ouvrage sera réalisé dans les règles de l'art avec consultation d'un laboratoire spécialisé qui définira en fonction du matériau l'épaisseur des couches, le type d'appareil et le nombre de passes.

L'imperméabilisation de cette couche de base peut être améliorée par la mise en place sur le sol compacté d'une nappe d'un produit imperméable pouvant encaisser d'éventuelles déformations, par exemple d'une nappe de feutre en polyester, tel que celui vendu sous la dénomination commerciale BIDIM, d'épaisseur 2 millimètres, rendue étanche par une pulvérisation de bitume à chaud spécialement étudié pour donner une certaine souplesse au produit obtenu, permettant d'admettre d'éventuelles déformations.

Il est mis en place sur ce feutre une couche de sable (granulométrie comprise entre 0,2 et 2 millimètres) d'environ 0,20 mètre d'épaisseur, recouvert par une couche de drainage (tout-venant compris entre 20 et 300 millimètres) d'épaisseur 0,50 mètre.

Le sol ayant été ainsi préparé, on peut alors procéder à la mise en place du tas.

Pour permettre la réalisation pratique des opérations de surface et pour limiter les effets de l'érosion, la plus grande pente du tas par rapport à l'horizontale doit être comprise entre 10 et 20 %, de préférence aux alentours de 15 % (± 2,5 %). Ces valeurs constituent un excellent compromis entre les possibilités de traitement et une surface trop importante occupée par le tas.

Elles correspondent en outre à une valeur acceptable pour la circulation des engins de transport de minerai.

De préférence cette mise en place du tas est réalisée de telle façon qu'il n'y ait pas de strates superposées, lesquelles entrainent une anisotropie vis-à-vis des circulations des solutions. A partir de ce modelé sont alors exécutées au bulldozer des terrasses tracées selon les courbes de niveau et s'inscrivant dans la pente générale du tas prévu à 15 %. La largeur de ces terrasses et la dénivellée entre ces terrasses dépendent de l'espacement des sondages d'injection. Cet espacement est lié à la perméabilité du matériau et peut être déterminé in situ, à partir d'un trou pilote, par méthode géophysique (par exemple séïsmique permettant de définir la forme des zones mouillées).

Avantageusement, un merlon est constitué sur le bord extérieur de la terrasse de telle manière que chaque terrasse constitue une sorte de bassin allongé selon une courbe de niveau.

On fore alors des puits d'injection d'un diamètre d'environ 25 % supérieur au diamètre des tubages ; ces puits sont verticaux (tolérance de 5 % environ par rapport à la verticale) et implantés le long de l'axe de chaque terrasse à une maille avantageusement définie par les résultats de campagne séïsmique.

La profondeur optimale de ces trous est également donnée par la campagne géophysique. Elle doit être telle que la couche de base ne soit pas perforée.

Ces puits sont de préférence tubés à l'aide de tubes plastiques crépinés, les têtes de tubage étant avantageusement munies d'un raccord en forme de croix qui permet d'une part la mise en place d'un tube plein permettant la traversée des couches de recouvrement et d'autre part l'interconnection des puits d'un même niveau au moyen d'un tube crépiné horizontal ayant de préférence le même diamètre que celui qui sert au tubage vertical.

Avantageusement ces tuyaux horizontaux sont sensiblement disposés selon l'axe des terrasses et noyés dans une couche drainante composée par des matériaux à granulométrie grossière (tout-venant compris entre 20 et 300 millimètres) occupant le volume compris entre la sole de la terrasse et le profil général du tas ; cette couche drainante sert de vase d'expansion au système d'injection de solutions lixiviantes.

Il est à remarquer que ce procédé de mise en contact du produit à lixivier avec la solution lixiviante représente une des caractéristiques les plus importantes de cette nouvelle technique, l'envoi des solutions à différents niveaux du tas permet en effet d'éviter les phénomènes de colmatage constatés dans le procédé classique de circulation "per descensum" des solutions ; l'existence d'un vase d'expansion permet en outre d'envoyer éventuellement des solutions sous pression dans les trous d'injection.

On met en place sur les flancs du tas pentés à 15 % une couche imperméable formée de matériaux compactés et destinés à éviter d'une part que les solutions lixiviantes ne soient diluées par les eaux de ruissellement et les précipitations atmosphériques et d'autre part que les solutions de lixiviation sortent du tas et polluent les eaux superficielles.

Cette couche peut être réalisée selon la même procédure que celle exposée pour la préparation de la base du tas.

Cette couche compactée une fois formée assure que le tas est enfermé dans ce que l'on pourrait appeler une poterie en terre crue. Toutefois, ce genre de couche est en général peu résistante à l'érosion par l'eau de ruissellement.

C'est pourquoi on recouvre cette couche imperméable d'une couche drainante qui peut également être réalisée avec des matériaux trouvés dans l'exploitation et pour le choix de laquelle il y a donc lieu là aussi de demander une étude spécifique à un laboratoire spécialisé.

L'épaisseur de cette couche sera avantageusement comprise entre 0,60 mètre et un mètre environ, soit en moyenne 0,80 mètre pour permettre un bon développement des racines des végétaux qui seront plantés.

Cette couche drainante est elle-même recouverte d'une couche de terre végétale de 0,10 à 0,50 mètre d'épaisseur, correspondant à la terre végétale qui avait été initialement stockée lors du décapage initial.

La couche compactée, la couche drainante et la terre végétale seront mises en place autour des tuyaux pleins verticaux donnant accès aux puits d'injection.

Afin d'éviter son entraînement par les eaux de ruissellement, on plante une végétation permettant de fixer la terre végétale. Cette végétation est bien connue des spécialistes des Eaux et Forêts et est choisie dans le groupe des arbres et arbustes à racines traçantes. Ces arbres et arbustes seront évidemment choisis dans les associations végétales propres à la région.

On peut éventuellement renforcer l'imperméabilité superficielle du système par la mise en place d'une couche de feutre de polyester imperméabilisé au bitume, du même type qu'à la base du tas ; pour éviter des glissements de terrain sur cette surface lisse, il faudrait alors remplir les bassins formés par les terrasses d'une couche drainante d'épaisseur uniforme (un mètre), la couche de feutre étant placée au-dessus de cette couche drainante ; on reconstituerait au-dessus de ce film imperméable le modelé à 15 % en couche drainante, les revêtements supérieurs étant conformes au schéma précédent.

Le tas ainsi formé se comporte comme un immense réacteur rendu étanche vis-à-vis de l'environnement, ce qui présente le double avantage de ne pas polluer ce dernier et que celui-ci ne vienne pas perturber la lixiviation et rendre impur le lixiviat par des éléments indésirables, ce qui permet de réaliser une lixiviation en tas par exemple en zone équatoriale sans être géné par les précipitations.

La solution lixiviante peut être envoyée à une borne de répartition, conçue pour résister aux intempéries et à la corrosion, située au sommet du tas.

Le ravitaillement des trous d'injection peut être réalisé très simplement par des tuyauteries mobiles réliées à la borne précédente.

Le débit des solutions peut être controlé par vanne, de telle manière que les trous d'injection soient au moins saturés, le niveau des liquides dans les puits en

0143007

service étant détecté par mesures piézométriques.

Le cas le plus simple et le plus général consiste à récupérer les liqueurs à la base du tas au niveau du film d'étanchéïté. Le bassin de récupération de ces solutions est implanté de telle façon que les liqueurs puissent y couler par gravité.

La zone imperméable située à la base du tas peut avantageusement être conçue de manière à ce que l'on ait le plus grand nombre possible de zones de récupération des solutions en tas, indépendantes entre elles et permettant de définir chacune un volume de minerai correspondant à un module de lixiviation.

La conception la plus simple consiste à onduler la surface de base, les creux de chaque onde faisant l'objet d'une récupération individuelle.

On peut éventuellement récupérer une partie des solutions lixiviantes, par pompage dans les puits voisins des puits en service, le dispositif d'étanchéïté de base ne pouvant cependant être simplifié, pour des raisons de sécurité.

L'exploitation des tas en modules autonomes de moindres dimensions présente les avantages suivants :
- possibilité de démarrer très rapidement la production sans attendre la fin de la constitution du tas
- très grande souplesse dans le fonctionnement chimique avec possibilité de recirculations internes, circulations en série, mise en murissement, etc...
- étalement des coûts de préparation du site et de remise en état des sols.

Cette technique décrite pour le traitement de minerais d'uranium peut être utilisée pour la lixiviation en tas de nombreux autres minéraux, les puits d'injection pouvant être en partie équipés d'aspirateur en cas de dégagements gazeux importants.

Il est à noter de plus que l'enveloppe d'environ deux mètres d'épaisseur qui coiffe le tas permet une bonne isolation thermique de ce tas et par conséquent le traitement à chaud de produits quelles que soient les conditions climatiques extérieures.

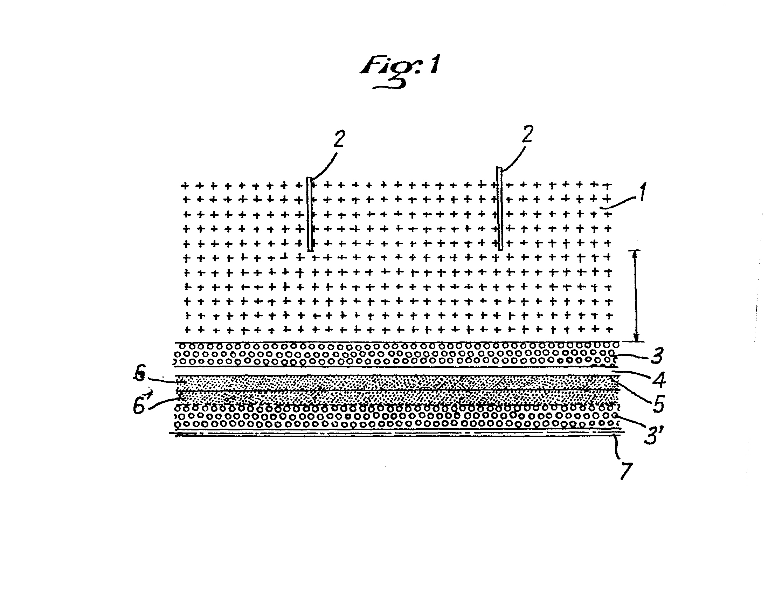

La figure 1 représente une coupe à la base du tas dans lequel le minerai (1) est alimenté par des tuyaux d'injection de solution lixiviante (2) et repose sur une couche drainante (3), elle-même surmontée d'un drain actif (4) placé sur une couche de "Bidim" bitumé (5). Le "Bidim" repose sur deux couches de stériles compactés de 40 centimètres chacune (6 et 6'). Une couche drainante (3') ainsi qu'une couche drainante de sécurité (7) permettent de laisser s'écouler le eaux du sol.

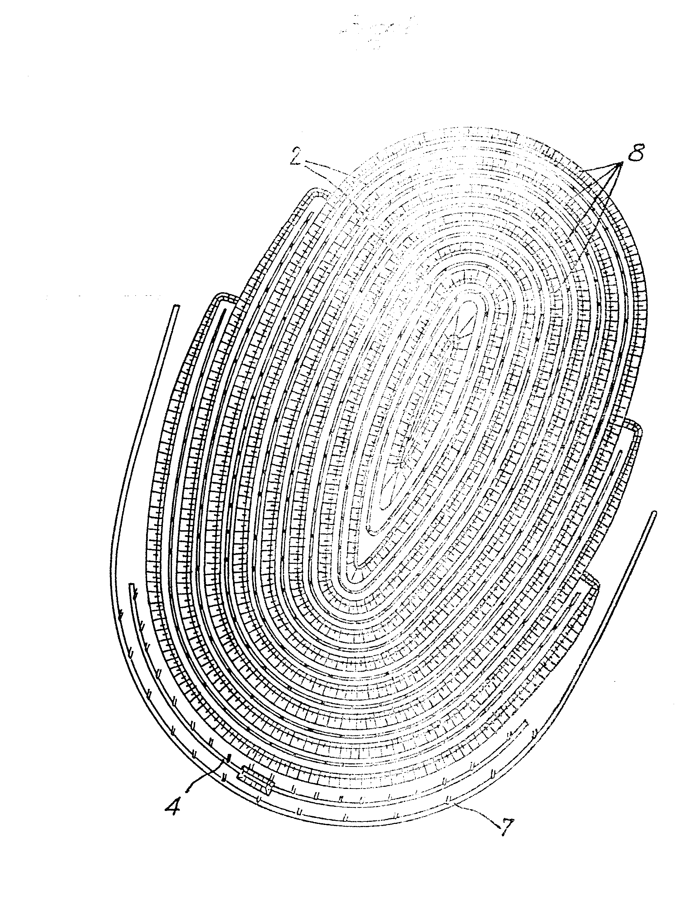

La figure 2 représente une vue de dessus d'un tas de lixiviation avant recouvrement des terrasses. On retrouve dans ce schéma les tuyaux d'injection de solution lixiviante (2), les drains de sécurité (7), les drains actifs (4) ainsi que les terrasses (8).

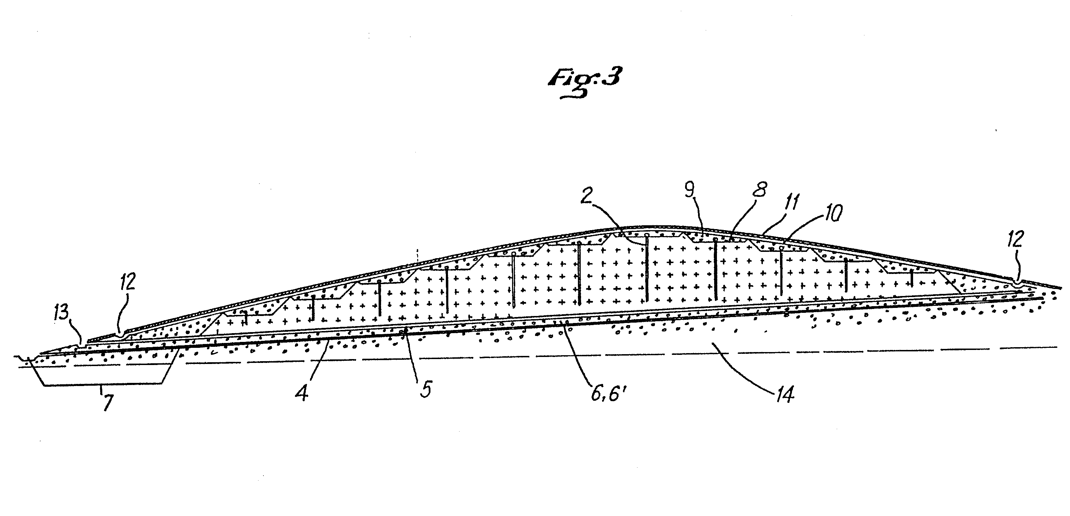

La figure 3 représente l'aspect général en coupe du tas à lixivier. On retrouve les tuyaux d'injection de solution lixiviante (2), des couches drainantes de stériles (9) placées sur les terrasses (8), du stérile compacté supérieur (10), une couche de terre végétale placée sur une couche drainante (11), des rigoles de récupération des eaux de ruissellement (12) et une rigole de récupération des solutions lixiviantes (13) placée à l'extrémité des drains actifs (4), le "Bidim" bitumé (5), les drains de sécurité (7), les deux sous-couches de stériles compactés (6, 6'). Sur cette figure apparait en outre le sous-sol (14), la ligne en grands tirets discontinus représentant le profil horizontal, les pentes du tas et du sol avant la formation du tas étant respectées sur la figure.

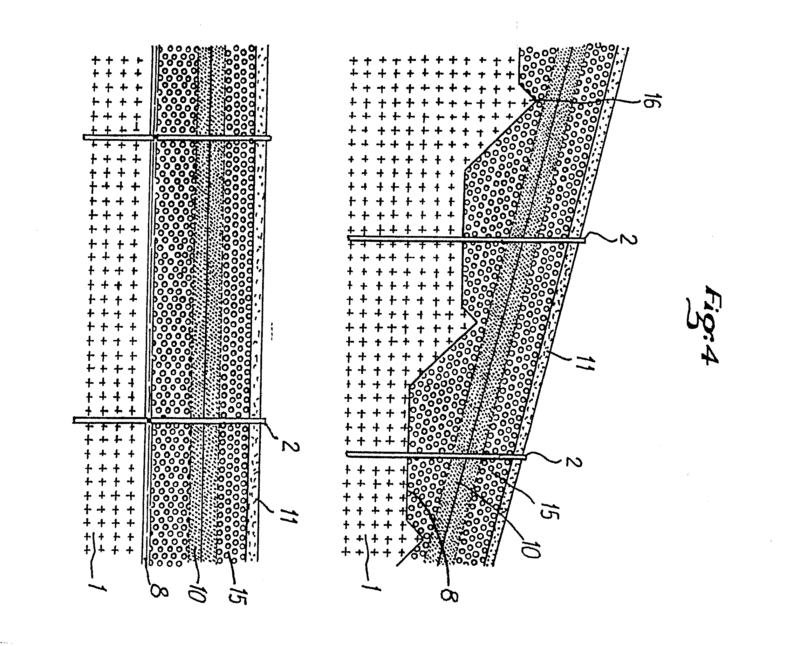

La figure 4 représente une coupe transversale des terrasses ainsi qu'une coupe longitudinale. Dans ces coupes on retrouve la terre végétale (11), une couche drainante (15), deux sous-couches de stériles compactés de 40 centimètres chacune (10), les terrasses (8) avec des merlons (16), des tuyaux d'injection de solution lixiviante (2) et le minerai (1).

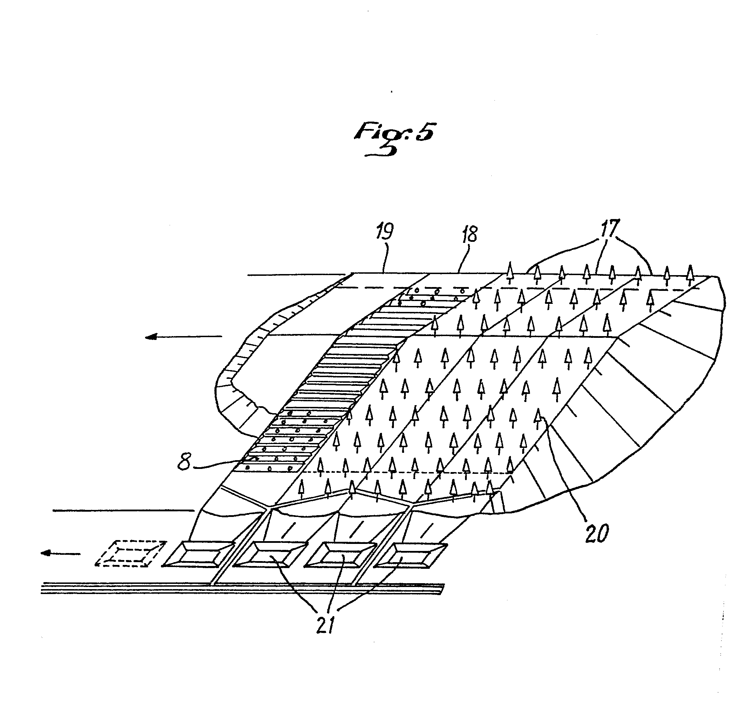

La figure 5 montre l'aspect général d'une lixiviation par module dans laquelle on retrouve trois modules

en fonctionnement (17), un module en cours d'aménagement (18) et un module en cours de mise en place (19). Les modules sont mis en place sur cette figure de la droite vers la gauche. On remarquera la végétation (20) sur les modules en fonctionnement, les terrasses (8) dans le module en cours d'aménagement. Des bassins (21) recueillent les solutions provenant des rigoles (13) permettant la récupération des solutions lixiviantes.

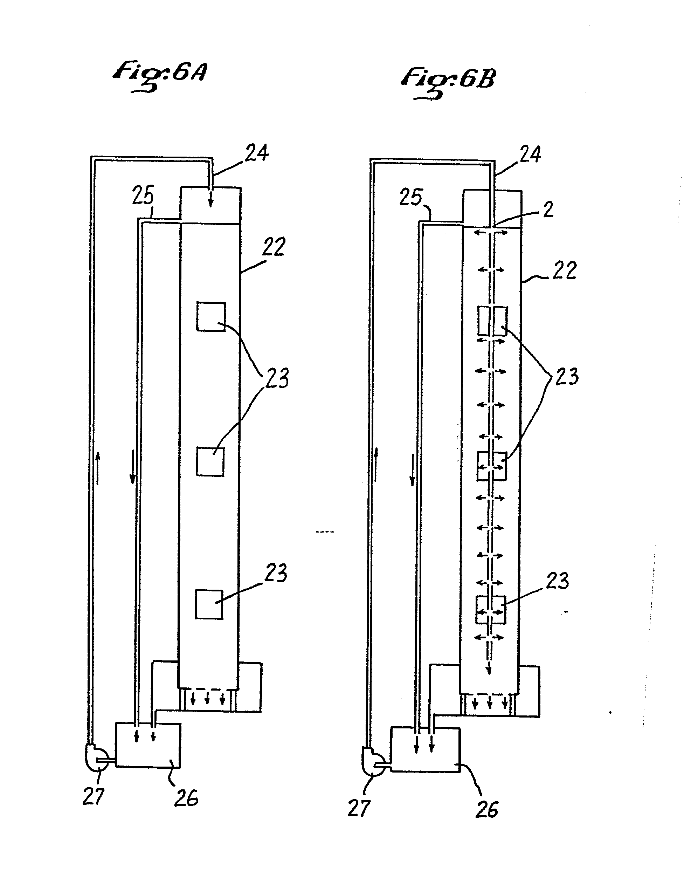

La figure 6A représente le système de laboratoire de l'exemple 1. Une colonne (22) remplie de minerai de 400 millimètres de diamètre et de 3,5 mètres de hauteur présentant des hublots (23) reçoit une solution lixiviante de la conduite (24). Le niveau de la solution est maintenu constant à l'aide d'un trop-plein (25). La solution est récupérée dans un réservoir de 200 litres (26). Une pompe (27) permet de recycler les solutions de lixiviation non épuisées ou provenant du trop-plein en (24).

Dans la figure 6B, il s'agit du même appareil dans lequel les dispositifs ayant les mêmes fonctions sont référencés des mêmes numéros et dans lequel on retrouve le tuyau d'injection de solution lixiviante (2).

Les exemples non limitatifs suivants ont pour but de mettre les spécialistes à même de déterminer aisément les conditions opératoires qu'il convient d'utiliser dans chaque cas particulier.

Exemple 1 : Essais à l'échelle du laboratoire

Ces essais permettent de démontrer l'intérêt de la technique selon la présente invention :
- déterminer l'aptitude à la lixiviation en tas d'un minerai à partir d'un échantillon supposé représentatif du gisement considéré, d'environ deux tonnes
- caractériser ce minerai par des paramètres qui permettent de définir l'installation :
    . vitesse de percolation des solutions à travers le lit de minerai
    . composition de la liqueur d'attaque.
    . rendement en fonction du temps.

0143007

Réalisation :

Tests sur un petit réacteur agité de laboratoire permettant de définir le comportement du minerai considéré en usine classique et de connaître en particulier la teneur optimale en uranium des résidus et la consommation de réactifs.

Les tests propres à la lixiviation en tas s'opèrent de la façon suivante :

Construction de deux colonnes en PVC de 3,50 mètres de haut et 400 millimètres de diamètre comprenant chacune un lit filtrant à la base et un bassin de récupération des solutions.

Des fenêtres transparentes permettent de suivre les cheminements périphériques des liqueurs.

Les deux colonnes sont remplies de minerai à granulométrie 0 - 200 jusqu'à 20 centimètres du sommet : l'une des colonnes est en arrosage "per descensum", la répartition des solutions en tête se faisant par l'intermédiaire d'un feutre, la régulation de l'arrosage se fait par l'intermédiaire d'un trop-plein renvoyant l'excédent de solution dans le bassin de base équipé d'une pompe (voir figure 6A).

L'autre colonne est équpée d'un tuyau central d'injection (tube PVC crépiné de 20 millimètres), le système de régulation est identique au précédent, la pompe gavant le tuyau d'injection.

L'adjonction de colorants appropriés permet éventuellement de mieux suivre l'imprégnation des zones.

Les divers essais effectués ont montré que cet appareillage permettait de définir avec une bonne précision les paramètres caractéristiques de la lixiviation statique avec ou sans injection :

- vitesse de percolation des solutions
- débit d'arrosage admissible
- rendement.

Résultats obtenus sur le minerai d'un petit gisement granitique à faible teneur :

Essais en réacteur classique :

| Essai | Poids sec (t) | Teneur (ppm) | Teneur résidus | Rendement | Acide ajouté g/kg | Acide libre fin attaque | Aut. cons. |
|---|---|---|---|---|---|---|---|
| 1 | 189,2 | 609 | 30 | 95 | 84,6 | 50,5 | 51,3 |
| 2 | 181,4 | 543 | 27 | 95 | 55,1 | 44,6 | 41,3 |
| 3 | 187,4 | 555 | 31 | 94 | 26,7 | 11 | 19,2 |

Essais de lixiviation statique (figure 6) :

| | Essai par percolation | Essai par injection |
|---|---|---|
| Vitesse de percolation | $0,08 \times 10^{-5}$ m/s | $2,1 \times 10^{-5}$ m/s |
| Débit d'arrosage admissible | 0,8 m$^3$/t | 7,74 m$^3$/t |
| Rendement au bout de 33 jours | 12 % | 86 % |

L'essai par injection a été arrêté volontairement au bout de 33 jours pour permettre des vérifications (échantillonnage).

L'essai par percolation a été prolongé à 74 jours, du fait du faible rendement à 33 jours (voir schéma 1 ci-après).

SCHEMA 1

- 13 -          0143007

Exemple 2 : Résultats obtenus sur un tas de minerai de 530 000 tonnes traité initialement en lixiviation statique "percolation" et repris en lixiviation statique "injection"

Nous sommes dans le cas d'un gisement important exploité en Découverte et équipé d'une usine conventionnelle ; le tas intéressé est composé de minerais marginaux, produit fatal de la Découverte ; il comprend 531 500 tonnes à 380 ppm, soit 202 000 kg d'uranium.

Ce tas occupe au sol une surface d'environ 20 000 $m^2$, la hauteur moyenne est de 15,6 mètres ; les flancs sont pentés à environ 40 degrés sur l'horizontale.

Le traitement par percolation s'est poursuivi sans interruption de 1973 à 1981 avec des solutions se caractérisant par une acidité libre de l'ordre de 10 à 15 grammes par litre.

La courbe ci-jointe montre que le traitement pouvait être considéré comme terminé à fin 81, le rendement étant de 69 %, l'asymptote semblant se situer à 70 %.

Des trous d'injection ont été forés à maille 10 x 10 sur l'ensemble du tas au printemps 1982 ; le traitement par injection a commencé en juin 1982.

On observe une reprise nette de la production du tas, la pente de la courbe rendement/temps pouvant laisser espérer une nouvelle asymptote qui devrait être comprise entre 95 et 90 % (schéma 2 ci-dessous);

Au 1er juin 1983 le rendement atteignait 75 % ; les derniers résultats ne semblent pas montrer de baisse de la production du tas.

SCHEMA 2

0143007

<u>Exemple 3 : Application de la technique "injection" à un</u>
<u>tas de minerai marginal de 1,5 millions de tonnes à 195</u>
<u>ppm, produit fatal d'une Découverte</u>

Il s'agit du même gisement que dans l'exemple précédent ; ce nouveau tas a été constitué en relais du tas n° 1, à partir de l'année 1976 mais il n'a été mis en production qu'à l'hiver 1982, directement par la méthode "injection".

La mise en exploitation est trop récente pour en tirer des résultats significatifs du point de vue chimique ; par contre, les données techniques de préparation du tas sont intéressantes comme illustration pratique de la méthode adaptée à un grand tas.

Site choisi : tête de thalweg sans eau dont les pentes sont de l'ordre de 5 %, correspondant à un socle granitique stable (zone résistante en géophysique électrique).

Préparation du terrain :
- drainage mis en place à proximité du bed rok
- terrain compacté
- couche drainante.

Formation du tas : le tas se présente sous la forme d'une coupole dont les pentes sont uniformément de 15 %, le sommet étant à 30 mètres au-dessus de la zone de base.

Les différentes études ont abouti à la détermination d'une maille de forage de 10 m x 10 m, ce qui a entrainé la création d'une série de terrasses à différents niveaux dont le pas est de 1,50 m, la largeur des terrasses étant de l'ordre de 7 mètres (figure 4).

Le diamètre des forages est de 140 millimètres, le tubage crépiné étant de 110 millimètres ; ces forages ont été poussés jusqu'à environ 5 mètres de la base. Le système des tuyauteries horizontales et des croix est conforme à la description théorique précédente.

Ces tuyauteries sont noyées dans la couche drainante (voir figure 4) d'environ 1,75 m de puissance moyenne.

Protection du tas :

Le tas est protégé par l'ensemble classique décrit précédemment et comprenant une couche étanche compactée de 0,80 m, une couche drainante d'un mètre et une couche de terre végétale de 0,30 m.

L'injection se fait puits par puits au moyen d'un tuyau mobile reliant la borne centrale au forage en question.

Le débit est de l'ordre de 55 m$^3$/heure.

La récupération a lieu dans un bassin situé en pies de tas.

La production actuelle est de l'ordre de 4 000 kg d'uranium métal par mois sous forme de solution à 100 mg/ envoyée sur résine échangeuse d'ions.

Exemple 4 : Application de la technique "injection" à un petit gisement isolé, exploité en Découverte (figure 5)

Il ne s'agit ici que d'un projet mais qui montre bien l'intérêt de cette méthode par rapport aux méthodes conventionelles.

Ce projet intéresse un tonnage de 1 700 000 tonnes à 400 ppm, soit 678 000 kilogrammes d'uranium métal (coupure 100 ppm).

Le calcul économique montre que le traitement de ce minerai à l'usine classique la plus proche nécessiterait une teneur de coupure de 1 000 ppm, ce qui ne permettrait de valoriser que 141 000 tonnes de minerai à 1 760 ppm, soit 247 000 kilogrammes d'uranium.

Le type de Découverte demeurant le même, le taux de Découverture passerait de 1,35/1 à 27,4/1 et le ratio tonnage total manipulé/kilogrammes d'uranium valorisable de 5,9 à 16,2.

Seul le procédé de lixiviation statique peut permettre l'exploitation éventuelle de ce gite très marginal.

L'installation prévue consiste en un système de modules autonomes d'une capacité unitaire de 120 000 tonnes.

Site choisi :

Flanc d'un cirque penté à environ 5 % sur socle granitique stable avec présence d'un verrou naturel permettant la détection aisée des fuites éventuelles. Ce site à été choisi pour ses caractéristiques exceptionnelles qui contrebalancent l'éloignement du gisement proprement dit (6 km).

Préparation du terrain :

Ensemble des opérations décrites dans l'étude théorique précédente et comprenant :

- le décapage de la terre végétale
- le drainage dans les arènes
- la mise en place d'une couche compactée
- la mise en place du voile de "Bidim" bitumé
- la mise en place de la couche de protection et de la couche drainante.

Il est à noter que cette préparation peut se faire module par module et fait donc partie du coût d'exploitation. Chaque module de 120 000 tonnes correspond à une ondulation du terrain aménagé.

Formation du tas :

La pente générale du tas est de 15 % à l'exception du côté marchand dont la pente correspond au profil d'équilibre.

Des terrasses sont aménagées perpendiculairement à l'ondulation.

Les caractéristiques du module sont les suivantes :

longueur : 250 mètres
largeur : 25 mètres
hauteur maximum : 20 mètres
hauteur minimale : 5 mètres.

Protection du tas :

Le système est conforme au schéma général décrit précédemment et comprend :

- une couche compactée
- une couche drainante
- une couche de terre végétale.

- 17 -

0143007

Il faut noter que ce revêtement est réalisé module par module mais que seul le module n° 1 peut être aménagé superficiellement, le module n étant en attente après mise en place du minerai et le module n 1 étant en préparation.

Foration des puits :

maille adoptée : 10 m x 10 m

diamètre du forage : 140

diamètre du tubage : 110.

Les trous sont forés jusqu'à 5 mètres du fond.

Injection :

Il existe une borne par module, située au sommet de chaque module, l'envoi des solutions se faisant par une tuyauterie mobile reliant la borne aux forages en activité.

Récupération des solutions :

Chaque module comporte un bassin de récupération des solutions équipé d'une pompe et situé en contrebas de la base du tas.

Les différents modules sont maintenus en activité pendant la durée de l'exploitation permettant ainsi une récupération optimale du métal contenu.

La production escomptée est de l'ordre de la centaine de tonnes d'uranium métal par an, le rendement prévu étant de l'ordre de 80 %.

0143007

REVENDICATIONS

1.    Nouveau procédé de lixiviation en tas caractérisé par le fait qu'il comporte les étapes suivantes :
a) on prépare le terrain destiné à recevoir le tas ;
b) on forme le tas ;
c) on fore des puits d'injection dans le tas ;
d) on injecte la solution de lixiviation au moyen des puits d'injection ;
e) on récupère la solution de lixiviation à la base du tas ou par pompage dans des puits voisins de ceux d'injection.

2.    Procédé selon la revendication 1, caractérisé par le fait que le tas est formé sur un terrain présentant une pente comprise entre 1 et 5 %.

3.    Procédé selon la revendication 2, caractérisé par le fait que la pente est comprise entre 2 et 4 %.

4.    Procédé selon les revendications 1 à 3 prises séparément, caractérisé par le fait que le terrain sur lequel le tas est formé est drainé.

5.    Procédé selon les revendications 1 à 4 prises séparément, caractérisé par le fait que la surface du terrain est rendue étanche.

6.    Procédé selon la revendication 5, caractérisé par le fait que le terrain est rendu étanche au moyen d'une couche de matériaux compactée.

7.    Procédé selon la revendication 6, caractérisé par le fait que la couche de matériau compactée supporte un matériau du type feutre rendu étanche par un goudron.

8.    Procédé selon les revendications 1 à 7 prises séparément, caractérisé par le fait que le tas présente une pente comprise entre 10 et 20 % par rapport à l'horizontale.

9.    Procédé selon les revendications 1 à 8 prises séparément, caractérisé par le fait que le tas est recouvert d'une couche de matériaux compactée.

10.    Procédé selon la revendication 9, caractérisé par le fait que ladite couche compactée est recouverte

- 19 -

0143007

d'une couche de sable grossier.

11. Procédé selon la revendication 10, caractérisé par le fait que ladite couche de sable grossier est comprise entre soixante centimètres et un mètre.

12. Procédé selon les revendications 10 et 11 prises séparément, caractérisé par le fait que la couche de sable grossier est recouverte d'une couche de terre végétale.

13. Procédé selon la revendication 12, caractérisé par le fait que l'on plante une végétation sur la couche de terre végétale.

14. Procédé selon la revendication 13, caractérisé par le fait que la végétation est choisie dans le groupe constitué par les arbres et arbustes à racines traçantes.

15. Procédé selon les revendications 9 à 14 prises séparément, caractérisé par le fait qu'avant de mettre la couche de matériau compactée on met une sous-couche constituée par un feutre rendu étanche par un goudron.

16. Procédé selon les revendications 1 à 15 prises séparément, caractérisé par le fait que les puits et les galeries sont formés par des tuyaux présentant des perforations sur une grande partie de leur longueur.

17. Procédé selon les revendications 1 à 16 prises séparément, caractérisé par le fait qu'un réseau de galeries relie tous les puits de même niveau entre eux.

18. Procédé selon les revendications 1 à 17 prises séparément, caractérisé par le fait que la base du tas est drainée de manière à récupérer la solution de lixiviation à la base du tas.

19. Procédé selon les revendications 1 à 18 prises séparément, caractérisé par le fait que le tas est lixivié par modules.

20. Procédé selon les revendications 1 à 19 prises séparément, caractérisé par le fait que la solution de lixiviation peut être récupérée par pompe imergée placée dans des puits non en injection et situés à proximités des puits d'injection.

Fig. 1

0143007

Fig.3

*Fig:4*

Fig. 5

_Fig:6A_

_Fig:6B_

# RAPPORT DE RECHERCHE EUROPEENNE

**Office européen des brevets**

**0143007**
Numéro de la demande

EP 84 40 1372

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X,Y | US-A-3 441 316 (M.K. HANNIFAN)  * Revendications; colonnes 3-4 * | 1,4,16 -19 | C 22 B    3/00 E 21 B   43/28 E 21 B   43/00 |
| Y | US-A-1 928 728 (H.E. KEYES) * Revendications * | 1 | |
| Y | US-A-4 301 121 (H. VON KOHORN) * Revendications * | 1 | |
| A | US-A-4 279 868 (H. VON KOHORN) | | |
| A | US-A-4 249 777 (R.J. MORRELL) | | |
| A | US-A-4 091 070 (W.F. RIGGS) | | |
| A | US-A-4 080 419 (W.H. ENGELMANN) | | |
| A | US-A-4 017 309 (P.H. JOHNSON) | | |
| A | US-A-3 809 430 (S.D. MICHAELSON)  --- -/- | | |

**DOMAINES TECHNIQUES RECHERCHES (Int. Cl.4)**

C 22 B
E 21 B

Le présent rapport de recherche a été établi pour toutes les revendications

| Lieu de la recherche | Date d'achèvement de la recherche | Examinateur |
|---|---|---|
| LA HAYE | 18-10-1984 | JACOBS J.J.E.G. |

CATEGORIE DES DOCUMENTS CITES

OEB Form 1503 03 82

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

0143007

Numéro de la demande

**RAPPORT DE RECHERCHE EUROPEENNE**

Office européen
des brevets

EP 84 40 1372

| | **DOCUMENTS CONSIDERES COMME PERTINENTS** | | Page 2 | |
|---|---|---|---|---|
| Catégorie | Citation du document avec indication, en cas de besoin, des parties pertinentes | Revendication concernée | CLASSEMENT DE LA DEMANDE (Int Cl.4) | |
| A | FR-A- 429 319 (W. GÜNTHER) <br><br> --- <br><br> | | | |
| A | A.K. BISWAS et al.: "Extractive metallurgy of copper", 2e édition, 1980, pages 261-265, Pergamon Press, Oxford, GB; <br> * Pages 261-262,264 * <br><br> ----- | | | |
| | | | **DOMAINES TECHNIQUES RECHERCHES (Int. Cl.4)** | |

Le présent rapport de recherche a été établi pour toutes les revendications

| Lieu de la recherche <br> LA HAYE | Date d'achèvement de la recherche <br> 18-10-1984 | Examinateur <br> JACOBS J.J.E.G. |
|---|---|---|